(19) Europäisches Patentamt
European Patent Office
Office européen des brevets

(11) Publication number: **0 333 115**
**A2**

(12) # EUROPEAN PATENT APPLICATION

(21) Application number: **89104450.5**

(22) Date of filing: **14.03.89**

(51) Int. Cl.4: **C08L 67/02 , //(C08L67/02, 23:02,25:12,67:02)**

(30) Priority: **14.03.88 US 167620**
**16.02.89 US 311514**

(43) Date of publication of application:
**20.09.89 Bulletin 89/38**

(84) Designated Contracting States:
**BE DE FR GB IT NL**

(71) Applicant: **E.I. DU PONT DE NEMOURS AND COMPANY**
**1007 Market Street**
**Wilmington Delaware 19898(US)**

(72) Inventor: **Kassal, Robert James**
**609 Westmont Drive**
**Wilmington Delaware 19809(US)**

(74) Representative: **Abitz, Walter, Dr.-Ing. et al**
**Abitz, Morf, Gritschneder, Freiherr von Wittgenstein Postfach 86 01 09**
**D-8000 München 86(DE)**

(54) **Thermoplastic polyester composition.**

(57) Thermoplastic polyester compositions comprising:
(a) 34-98.7 weight percent of at least one polyarylate,
(b) 0-59.2 weight percent of at least one polyester,
(c) 1-12 weight percent of at least one olefin copolymer containing epoxide functionality, and
(d) 0.3-8.0 weight percent of at least one nitrile containing polymer
have surprisingly high solvent stress crack resistance toward fats, cooking oils and/or polar solvents.

EP 0 333 115 A2

# THERMOPLASTIC POLYESTER COMPOSITION

## CROSS REFERENCE TO RELATED APPLICATION

This application is a continuation-in-part of copending U.S. Application Serial Number 07/167,620, filed March 14, 1988.

## Technical Field

This invention relates to certain thermoplastic polyester compositions which are characterized by a suprisingly high solvent stress crack resistance toward fats, cooking oils and/or polar solvents. Thermoplastic polyester compositions can be comprised of aromatic polyesters, aliphatic polyesters, and/or blends of aromatic and aliphatic polyesters. Aromatic polyesters, hereinafter "polyarylates", are generally understood to include polymers derived from the reaction of one or more dihydric phenols with one or more aromatic dicarboxylic acids. Aliphatic polyesters, hereinafter "polyesters", are generally understood to include polymers derived from one or more aliphatic or cycloaliphatic diols, or mixtures thereof, and one or more dicarboxylic acids. The thermoplastic polyester compositions of the present invention are comprised of polyarylates optionally containing up to 60% by weight polyesters (based on the total of the polyarylate and the polyester), an olefinic copolymer containing epoxide functionality and a nitrile containing copolymer. The compositions of the present invention will include multi-phase melt blends of the above ingredients and, since two or more of the above ingredients may react or interact with each other under melt conditions, the compositions of the present invention will also include the reaction products of the above ingredients.

The compositions of the present invention are useful in preparing semi-finished and finished articles by techniques commonly used with thermoplastic materials, e.g., compression molding, injection mold, extrusion, blow molding, melt spinning, stamping and thermoforming. Finished products made from such compositions possess extremely desirable physical properties, including high stiffness, strength and solvent resistance.

## Background Art

U.S. Patent 4,348,500, granted September 7, 1982 to Robeson et al. discloses polyarylate compositions having improved hydrolytic stability, the compositions comprising a polyarylate, an aliphatic polyester, an epoxide, and optionally a thermoplastic polymer selected from aromatic polycarbonates, styrene polymers, poly(alkyl acrylates), polyurethanes, vinyl chloride polymers, poly(arylethers), copolyetherester block polymers, and polyhydroxy ethers.

U.S. Patent 3,647,921, granted March 7, 1972 to Berry discloses polyarylate compositions having improved melt stability, the compositions comprising a major proportion of a polyarylate and a minor proportion of a styrene polymer or copolymer.

U.S. Patent 3,792,118, granted February 12, 1974 to Kishikawa et al. dicloses styrene resin compositions having improved resistance to heat deformation, the compositions comprising 1 to 95% by weight of a styrene resin and 99 to 5% by weight of a polyarylene ester (polyarylate).

U.S. Patent 4,327,012, granted April 27, 1982 to Salee, discloses polyarylate compositions having improved hydrolytic stability, the compositions comprising a polyarylate and a styrene-acrylonitrile copolymer.

German Patent Publication 3202370, published to Brandstetter et al. August 4, 1983 discloses styrene copolymer compositions having improved resistance to heat deformation, the compositions comprising a styrene copolymer and a minor amount of a polyarylate.

U.S. Patent 4,440,912, granted April 3, 1984 to Fox et al. discloses copolymers of polyarylates and polyethylene acrylates having improved toughness.

Japanese Patent Publication Number 48-54159, published to Koshimo et al. July 30, 1973, discloses blends of polyarylates and polyethylene terephthalate having improved mold processability as compared with straight polyarylates.

Japanese Patent Publication Number 54-158453, published to Fukushima et al. December 14, 1979, discloses aromatic polyesters stabilized with certain acrylate copolymers.

Japanese Patent Publication Number 59-115352, published to Tokuzawa et al. July 3, 1984, discloses polyester compositions with improved impact resistance, the compositions comprising a polyester, an acid copolymer, and an olefin/glycidyl(meth)acrylate/vinyl acetate copolymer.

None of the references listed and discussed above disclose the particular blends of the present invention, or the high solvent stress crack resistance toward fats, cooking oils and/or polar solvents found with the compositions of the present invention.

## Disclosure of the Invention

This invention relates to certain thermoplastic polyester compositions which are characterized by a unique balance of good processing properties and good physical properties in articles molded from such compositions; in particular, these compositions are characterized by surprisingly high solvent stress crack resistance to fats, cooking oils and/or polar solvents. In addition, depending on the intended use of the compositions, they can be tailored to have the desired melt viscosity for the intended use and still maintain high solvent stress crack resistance to fats, cooking oils and/or polar solvents. For example, if the intended use is injection molding of large and/or intricate shaped articles, the compositions can be tailored to have a relatively low melt viscosity. Conversely, if the compositions are intended to be used in blow molding, they can be tailored to have a relatively high melt viscosity. More specifically, this invention comprises a blend of

(a) 34-98.7 weight percent of at least one polyarylate derived from at least one dihydric phenol and at least one aromatic dicarboxylic acid;

(b) 0-59.2 weight percent of at least one polyester derived from at least one aliphatic and/or cycloaliphatic diol and at least one dicarboxylic acid;

(c) 1-12 weight percent of at least one olefin copolymer containing epoxide functionality; and

(d) 0.3-8.0 weight percent of at least one nitrile-containing copolymer derived from at least one of styrene and $\alpha$-methyl styrene and at least one of acrylonitrile and methacrylonitrile.

All of the above percentages are based on the total of components (a), (b), (c), and (d) only.

The compositions of the present invention will include multi-phase melt blends of the above ingredients, and, since two or more of the above ingredients may react or interact with each other, the compositions of the present invention will also include melt blends containing the reaction products thereof. The product of the melt mixing is complex and has not been fully characterized. The polyarylate and the optional polyester may undergo ester exchange reactions in the melt to form new copolymers. Either the polyarylate or the polyester is capable of reacting with the olefin copolymer containing epoxide groups via a reactive end group or through reaction of an ester group with the epoxide group. Likewise the nitrile-containing copolymer may react with the end groups of the polyarylate or polyester. These reactions are usually sufficiently completed during the melt mixing or compounding operation that the products obtained are comprised largely of a continuous phase which is comprised of polyarylate, optionally plus polyester and any ester exchange products, and a dispersed phase or phases comprised of components (c) and (d) and reaction products thereof.

Component (a) the polyarylate and optional component (b) the polyester, will comprise 85-98.7 weight percent of the composition. The limits given hereinbefore for components (a) and (b) are equivalent to a concentration of 0-60 weight percent polyester based on the total weight of components (a) plus (b). For applications where the high heat distortion temperatures characteristic of polyarylates are required, little or no polyester should be added; however, when lower heat distortion temperatures are acceptable, it is advantageous to admix the lower-cost polyester. Blends containing a significant proportion of polyester will generally have improved processibility and equivalent solvent stress crack resistance as compared with blends in which the polyarylate is used alone.

Component (c), the olefin copolymer containing epoxide functionality will comprise 1-12 weight percent and preferably 5-10 weight percent of the composition. Compositions containing the olefin copolymer in excess of 12 weight percent generally have lower stiffness, higher coefficent of thermal expansion and higher viscosity in the melt.

Component (d) the nitrile-containing copolymer will comprise 0.3-8.0 weight percent, preferably 0.3-5.0 weight percent and most preferably 0.5-2.0 weight percent of the composition. Amounts less than 0.3 weight percent generally do not provide the level of solvent stress crack resistance exhibited by compositions of the invention. While amounts greater than 5.0% are not believed to provide any further significant improvements in the stress crack properties with respect to fats and cooking oils, higher amounts of the nitrile-containing copolymer are believed to offer significant improvements in the stress crack properties

with respect to polar solvents, and also improvements in other physical properties, including flexural modulus.

The polyarylates used as component (a) in the compositions of the invention are aromatic polyesters derived from one or more dihydric phenols and one or more aromatic dicarboxylic acids. The dihydric phenol can be a bisphenol as described in U.S. Patent 4,187,358 having the structure:

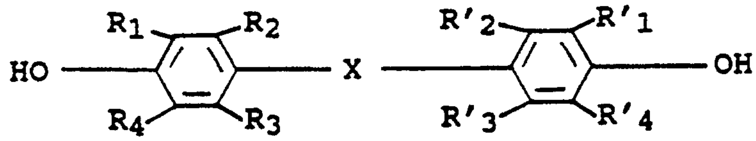

wherein -X- is selected from the group consisting of nothing; i.e., a covalent bond, -O-, -S-, $-SO_2$, -SO-, -CO-, an alkylene group containing 1 to 5 carbon atoms and an alkylidene group containing 2 to 7 carbon atoms, and $R_1$, $R_2$, $R_3$, $R_4$, $R_1'$, $R_2'$, $R_3'$ and $R_4'$, may be the same or different, each is selected from the group consisting of a hydrogen atom, a chlorine atom, a bromine atom and an alkyl group containing 1 to 5 carbon atoms, and/or a functional derivative thereof.

Additionally, up to 40 mole % of mononuclear dihydric phenols may be used in combination with the bisphenols. Representative are hydroquinone and resorcinol and substituted derivatives thereof containing one to four substituents selected from the group consisting of chlorine, bromine and lower alkyl.

Preferably, a mixture of 90 to 0 mole % of terephthalic acid and/or the functional derivatives thereof and 10 to 100 mole % of isophthalic acid and/or its functional derivatives is used as the acid component to be reacted with the bisphenol to prepare the polyarylate used in the compositions of the present invention. More preferably, a mixture of 0 to 30 mole % of terephthalic acid and/or the functional derivatives thereof and 100 to 70 mole % of isophthalic acid and/or the functional derivatives thereof is used. Polyarylate prepared from a bisphenol as described above and a mixture of 10-0 mole % of terephthalic acid and/or the functional derivatives thereof and 90-100 mole % of isophthalic acid and/or the functional derivatives thereof is most preferred. The molar ratio of the bisphenol to the sum of the terephthalic acid units and isophthalic acid units in the polymer is substantially equimolar. Aromatic hydroxy acids such as hydroxy benzoic or hydroxy naphthoic acid and other dicarboxylic acids (both aromatic and aliphatic) can also be incorporated into the polyarylate structure as a minor component.

Examples of functional derivatives of terephthalic or isophthalic acid which can be used in this invention include acid halides and diaryl esters. Preferred examples of acid halides include terephthaloyl dichloride, isophthaloyl dichloride. Preferred examples of diaryl esters include diphenyl terephthalate and diphenyl isophthalate.

Examples of suitable bisphenols are 4,4′-dihydroxy-diphenyl ether, bis(4-hydroxy-2-methylphenyl)ether, bis(4-hydroxy-3-chlorophenyl)-ether, bis(4-hydroxyphenyl)sulfide, bis(4-hydroxyphenyl)sulfone, bis(4-hydroxyphenyl)ketone, bis(4-hydroxyphenyl)methane, bis(4-hydroxy-3-methylphenyl)methane, bis(4-hydroxy-3,5-dichlorophenyl)-methane, 1,1-bis(4-hydroxyphenyl)cyclohexane, 1,1-bis(4-hydroxyphenyl)cyclopentane, 1,1-bis(4-hydroxyphenyl)cycloheptane, bis(4-hydroxy-3,5-dibromophenyl)methane, 1,1-bis(4-hydroxyphenyl)-ethane, 2,2-bis(4-hydroxy-3-methylphenyl)propane, 2,2-bis(4-hydroxy-3-chlorophenyl) propane, 2,2-bis(4-hydroxy-3, 5-dichlorophenyl)propane, 2,2-bis(4-hydroxy-3,5-dibromophenyl)propane, 3,3,3′,3′-tetramethyl spirobis-1,1′-indane-6,6′-diol and 1,1-bis(4-hydroxyphenyl)-n-butane. 2,2-Bis(4-hydroxyphenyl)propane is most preferred.

Typical examples of the functional derivatives of bisphenol which can be used are the alkali metal salts and diesters with aliphatic monocarboxylic acid containing 1 to 3 carbon atoms. Suitable examples of aliphatic monocarboxylic acids include formic acid, acetic acid, propionic acid, etc. Preferred functional derivatives of bisphenols are the sodium salts, the potassium salts, and the diacetate esters.

Polyarylates useful in the compositions of the present invention can be prepared by any of several known methods. The interfacial polymerization method comprises mixing a solution of an aromatic dicarboxylic acid chloride in a water-immiscible organic solvent with an alkaline aqueous solution of bisphenol. The solution polymerization method comprises heating bisphenol and a diacid dichloride in an organic solvent. One melt polymerization method comprises heating a diphenyl ester of an aromatic dicarboxylic acid and bisphenol. An alternative melt polymerization method comprises heating aromatic dicarboxylic acid and a diester (e.g., the diacetate ester) of bisphenol. These methods are described in detail in U.S. Patent Nos. 3,884,990, 3,946,091, 4,052,481 and 4,485,230.

In order to insure good physical properties in the compositions of the present invention, the polyarylate should have a logarithmic viscosity number ($\eta_{inh}$ or IV), defined by the following equation, of about 0.35 to

about 1.5, preferably .40 to 0.65

$$\eta_{inh} = \frac{\ln t_1/t_2}{C}$$

wherein $t_1$ is the falling time (in seconds) of a solution of the polyarylate, $t_2$ is the falling time (in seconds) of the solvent; and C is the concentration (g/dl) of the polyarylate in the solution. The logarithmic viscosity number used herein is determined in a trifluoroacetic acid-methylene chloride mixture (25/75 by volume) at 30 °C. The procedure is further described in Textbook of Polymer Science by F. Billmeyer, p. 79 (John Wiley & Sons, 1962).

The polyester resins useful as component (b) are well known in the art. The polyester resins are usually prepared by melt condensation of one or more dicarboxylic acids or ester-forming derivatives thereof with one or more glycols. Usually the glycol is employed in a stoichometric excess relative to the diacid.

Among the dicarboxylic acids suitable for preparing polyesters in accordance with the present invention are the aromatic dicarboxylic acids such as terephthalic acid, isophthalic acid, orthophthalic acid, 2,6-napththalene dicarboxylic acid, 1,5-naphthalene dicarboxylic acid, bis(p-carboxyphenyl)methane, anthracene dicarboxylic acid, 4,4′-diphenylether dicarboxylic acid; aliphatic dicarboxylic acids such as adipic acid; cycloaliphatic dicarboxylic acids such as 1,4-cyclohexane dicarboxylic acid and the like; or ester forming derivatives thereof.

The glycols suitable for preparing polyesters in accordance with the present invention include aliphatic and cycloaliphatic diols having 2 to 10 carbon atoms such as ethylene glycol, 1,3-propylene glycol, 1,4-butanediol, neopentyl glycol, 1,5-pentanediol, 1,6-hexanediol, decamethylene glycol, cyclohexanediol, and 1,4-cyclohexanedimethanol.

Poly(ethylene terephthalate) is especially preferred for use as component (b). Also preferred are polyesters derived from 1,4-cyclohexanedimethanol (usually a mixture of cis- and trans-isomers) and terephthalic acid optionally admixed with isophthalic acid and polyesters derived from a mixture of cyclohexanedimethanol and ethylene glycol with terephthalic acid.

The polyesters used herein have an intrinsic viscosity of from about 0.2 to about 2.0 dl/g as measured in a 60-40 phenol/tetrachloroethane mixture or similar solvent at 23 °-30 ° C.

As indicated hereinbefore, the use of component (b) is optional in the compositions of the instant invention. For end uses which do not require the maximum heat distortion temperatures provided by polyarylates, the incorporation of up to 60 parts by weight of polyester resin per 100 parts by weight of components (a) and (b) may be advantageous from an economic standpoint.

The epoxide group-containing olefin copolymers which serve as component (c) contain recurring units of the monomers:

(1)

$$CH_2{=}C(R)COOCH_2\overline{CHCH_2O}$$

wherein R = H or alkyl of 1-6 carbon atoms, and

(2) $CH_2 = CHR$ where R = H, lower alkyl or phenyl

The copolymer can also contain one or more of the following:

(3) $CH_2 = C(R_1)COOR_2$ where $R_1$ = H or lower alkyl and $R_2$ = alkyl of 1-8 carbons; and

(4) CO (carbon monoxide);

and include polymers derived from monomers of class (1) with monomers of class (2) either alone or in admixture with monomers of classes (3) and/or (4).

Thus, the polymers may be dipolymers derived from one or more monomers of classes (1) and (2). Ethylene/glycidyl methacrylate copolymers are representive. More preferred are terpolymers containing one or more monomers selected from class (3) in addition to monomers from classes (1) and (2). Examples of these terpolymers include ethylene/alkyl(meth)acrylate/glycidyl methacrylate copolymers.

The concentration of monomers of class (1), the glycidyl esters, may vary from about 0.5-15% by weight, preferably 1-7% by weight, in the epoxide group-containing polymers described hereinbefore.

Olefin terpolymers derived from monomer classes (1) and (2) and further containing up to about 40% by weight of units derived from one or more monomers of class (3) are preferred. Especially preferred are

terpolymers of ethylene containing 10-30% by weight n-butyl acrylate and 1-7% by weight glycidyl methacrylate. The monomer of class (4) can be present in minor amount, provided that the essential characteristics of the olefin copolymer are not substantially altered.

The nitrile containing copolymers, which can be used as component (d) in the compositions of the present invention, are well known in the art and available commercially. Copolymers containing about 10-60 weight percent, and preferably 20-35 weight percent, of units derived from (meth)acrylonitrile can be used in the compositions of the present invention. Copolymers of styrene and acrylonitrile are preferred because of their ready availability and relatively low cost. The preparation and properties of styrene-acrylonitrile copolymers is discussed in the "Encyclopedia of Polymer Science and Technology" John Wiley and Sons, Inc., First Edition, 1964, Volume 1, pages 425-435 and, Second Edition, 1985, Volume 1, pages 452-464.

Other additives as are known to those familiar with polymer compounding may be included in the composition. These additives include stabilizers including phosphites, antioxidants, flame retardants, reinforcing agents such as glass fiber and flake, minerals, ultraviolet light stabilizers, pigments and colorants, etc.

In all processing operations, it is preferred to dry the components of the thermoplastic product sufficiently to minimize unwanted hydrolytic degradation, preferably to less than 0.01% water. Operating temperatures should also be selected consistent with obtaining a fluid melt but minimizing thermal degradation of the composition and its components.

The melt mixing of the three, or optionally four, components of the composition of the present invention can be carried out in any of the polymer melt mixing devices which are known to those skilled in the art as being capable of providing sufficient heat and shear to melt and adequately mix the starting materials. For example, the polymers can be mixed in an internal mixer such as a Brabender Mixer, in a Farrel Continuous Mixer (FCM), in a Buss Kneader, in a single screw extruder, or preferably in a twin screw extruder. It is preferable when mixing polymers at high temperatures to protect them from exposure to air by using a blanket of inert atmosphere around the openings or ports of the mixing device.

Blending in a single screw extruder is accomplished by feeding a physical mixture of the components to be blended to an extruder which has been fitted with a screw that develops sufficient energy to melt and mix the components. The screw may be of a single-stage design for use in an unvented barrel or of a two-stage design for use with a vented barrel. Barrier or special mixing screws are especially preferred. The barrel temperature settings would be selected to provide the desired melt temperature and a screw speed selected within the normal operating range of the machine, usually near the upper end of the range. The product exit the die may be pelletized or formed directly into a shape.

The compositions of this invention may also be compounded in a twin-screw extruder. The ZSK series machines made by the Werner & Pfleiderer Company are examples of suitable twin-screw machines. These machines employ two intermeshing co-rotating screws which are assembled from various elements into a suitable configuration. The selection of a screw configuration is not critical to the invention. A typical configuration will use conveying elements to convey the feed material from the feed zone to a melting zone in which the material is compressed and melting begins. A section of "kneading blocks" followed by "reverse elements" next provides high shear and pressure to further the melting and mixing processes which permit the various reactions to begin. If the extrusion is to be conducted under vacuum, the reverse elements serve also to provide a melt seal following which the melt will be decompressed in the section under vacuum. Following the vacuum zone, the screw recompresses the melt and continues the dispersion process and may optionally again pass it through kneading blocks and reverse elements which, if present, also serve as a vacuum seal for this side of the vacuum zone. The melt is then further compressed and mixed as it passes through the end of the extruder and out the die. The die may be designed to form an end use shape directly, i.e., a profile, sheet or parison, or it may produce strand for pelletizing the product. In a machine such as a Baker-Perkins, the melt from the twin-screw mixer will be discharged to a single-screw extruder or other melt pump for pelletizing or shaping.

The amount of work which the melt mixer does on a sample can have an effect on the properties of test bars molded from the product. In general, the composition must be subjected to sufficiently intense mixing to produce the desired dispersion.

The composition of the present invention may be processed into useful objects by the many fabricating processes known to those familiar with the art of fabricating thermoplastics. As indicated above, it may be formed into a useful shape directly exit the compounding extruder. Such shapes include, but are not limited to, sheets, film, rods, tubes, various profile shapes and coatings. These same products can, of course, also be made in the more usual manner by re-extruding precompounded product.

The compounded product will more typically be used to injection mold end-use objects. In this process the product of the invention in pellet form is introduced to the melting zone of a molding machine and

converted to a fluid melt under the action of shear, applied heat and compression. The melt is then transferred (injected) under pressure to a cooler mold and allowed to solidify.

The physical properties of the molded articles may depend on the manner in which it is fabricated. This is known to those skilled in the art of fabricating thermoplastics containing dispersed phases. Processing parameters such as melt temperature, mold temperature, melt flow paths, melt shear rates, mold fill times, and part thickness all influence many of the physical properties of a fabricated object. These parameters must be considered as one selects and optimizes a fabricating process to produce a desired balance of properties.

Most amorphous and some crystalline polymers exhibit a sensitivity to solvents which is manifested in a tendency to crack, craze or otherwise change when subjected to specific solvents while the polymer is under an applied stress. This phenomenon is known as solvent stress cracking. A variety of laboratory tests have been developed to quantify a polymer's resistance to solvent stress cracking (known as Solvent Stress Crack Resistance or SSCR) and a particular test is chosen based on the intended application or the degree of resistance of the polymer. The tests used in the following Examples were performed on injection molded test bars stressed in a jig designed to produce the desired level of surface strain.

The test procedure used to determine the stress cracking resistance to cooking oils and grease of the compositions prepared in the Examples involves placing a standard ASTM tensile test bar (8.5" x 1/2" x 1/8") in a jig consisting of heavy sheet metal having attached thereto two metal blocks spaced 8.25" apart. The test bar is bowed upward from the base of the jig when it is inserted in the jig. This bowing imposes a reproducible strain on the bar. The upper surface of the test bar is then coated with an oil or fat and the bar and jig are placed in a circulating air oven at 49°C (120°F), unless specified otherwise. The bar is observed periodically, usually on an hourly or daily schedule. The formation of cracks in the bar or breaking of the bar constitutes failure of the bar.

Where not otherwise specified, all parts and percentages are by weight in the following Examples.

In the following Examples, the polyarylate, hereinafter PAR, used was a resin made from 2,2-bis(4-hydroxyphenyl)propane and commercially available isophthalic acid via the diacetate of the bisphenol; inh 0.52-0.54.

In the following Examples, the polyester, hereinafter PET, used was polyethylene terephthalate; inh nominally is 0.7. In addition, the black concentrate was prepared in an amorphous polyester derived from approximately 30 weight percent ethylene glycol, 1.3 weight percent diethylene glycol, 27.7 weight percent isophthalic acid, and 41 weight percent terephthalic acid.

In the following Examples, the olefin copolymers containing epoxy functionality used had the compositions and properties listed in Table I. Melt Index, as reported in the following table was measured according to ASTM-D-1238, Condition E.

TABLE I

| Olefin Copolymer | Ethylene % | Butyl Acrylate % | Glycidyl Methacrylate % | Melt Index g/10 min, |
|---|---|---|---|---|
| A | 67.9 | 27 | 5.1 | 12 |
| B | 71.6 | 27 | 1.4 | 13 |

## EXAMPLES

### Control Example A

This example illustrates the effect of increasing amounts of olefin-epoxy copolymer (ethylene/n-butyl acrylate/glycidyl methacrylate terpolymer, hereinafter EBAGMA) on the resistance to cooking grease of blends of PAR-PET-EBAGMA in the absence of nitrile containing copolymer. Three samples were prepared having the compositions shown in Table II.

TABLE II

| | Sample | | |
|---|---|---|---|
| | A-1 | A-2 | A-3 |
| PAR, % | 47.1 | 44.9 | 41.7 |
| PET, % | 23.2 | 23.1 | 26.6 |
| Olefin copolymer A, % | 7.6 | 10.0 | 12.0 |
| Poly(tribromostyrene), % | 17.2 | 17.0 | 17.0 |
| $NaSbO_3$ 55% dispersed in an ethylene polymer, % | 4.2 | 4.2 | 3.4 |
| Black pigment, 50% concentrate in PET/I | 0.76 | 0.75 | 0 |

The samples were prepared by dry blending all of the ingredients listed in Table II and passing the dry blends through a twin-screw extruder at a barrel temperature of about 300° C. The extrudates were stranded and pelletized. Test bars of the three samples were prepared by injection molding and the resulting bars were tested for resistance to cooking greases by the test described hereinbefore. The greases used in the tests were a household vegetable shortening (Crisco), a household vegetable oil (Wesson Oil) and bacon grease obtained by actually frying bacon. These three greases were found to give results substantially equivalent to each other in the cooking grease test with any given polymer composition. Results of the cooking grease test on the three polymer compositions of this example were as follows:

Sample A-1 containing 7.6% olefin copolymer failed within 30 minutes.

Sample A-2 containing 10% olefin copolymer appears to be a borderline composition if 166 hours in the cooking grease test is taken to be acceptable. Some test samples broke in as little as 30 minutes, while others survived for more than 166 hours. The results suggest that when the composition is borderline, minor variations in the conditions used for injection molding the test bars has a large effect on the resistance of the samples to cooking greases. Because of these inconsistencies in performance, Sample A-2 was not considered to be acceptable.

Sample A-3 containing 12% olefin copolymer yielded test bars which consistently tested to 166 hours without failure. Unfortunately this composition has such a high melt viscosity that it is not suitable for preparing injection molded parts, particularly those with thin sections. Complex injection molded parts prepared for Sample A-3 have prominent weld lines and gate blush (a smeared appearance where the polymer melt enters the mold). Because of its extremely high melt viscosity, Samples A-3 is not considered to be commercially attractive for many injection molding applications in spite of its good resistance to oils and greases.

Control Example B

A second series of compositions derived from PAR, PET and olefin copolymer were prepared using a different flame retardant. These samples were prepared from the materials shown in Table III. Results of the cooking grease test are also included in Table III.

TABLE III

| | Sample | | | | | |
|---|---|---|---|---|---|---|
| | B-1 | B-2 | B-3 | B-4 | B-5 | B-6 |
| PAR, % | 51.2 | 45.0 | 51.2 | 51.2 | 50.3 | 45.0 |
| PET, % | 26.4 | 30.0 | 26.4 | 26.4 | 25.9 | 30.0 |
| Olefin copolymer A, % | 7.5 | 7.5 | 10.0 | 10.0 | 10.0 | 10.0 |
| Perbromo-1,4-diphenoxybenzene,% | 12.0 | 14.0 | 10.0 | 10.0 | 11.0 | 12.0 |
| $NaSbO_3$,80% in polyethylene, % | 3.0 | 3.5 | 2.5 | 2.5 | 2.75 | 3.0 |
| Cooking grease test, 60 hrs. | Fail | Fail | Fail | Pass | Fail | Pass |

Samples B-1 and B-2 show that in the absence of nitrile containing copolymer, 7.5% olefin copolymer does not protect the samples from grease. Samples B-3 through B-6, even with 10% olefin copolymer, give

inconsistent performance and represent a borderline composition with regard to resistance to cooking grease. It should also be noted that the test was run for only 60 hours, whereas the compositions of the present invention consistently achieve "pass" ratings even after more than 150 hours.

Example 1

A series of compositions containing PAR, PET, olefin copolymer and styrene-acrylonitrile copolymer (SAN) was prepared by mixing dry blends of all the ingredients in a twin-screw extruder. The ingredients for these compositions are given in Table IV.

TABLE IV

| | Sample | | | |
|---|---|---|---|---|
| | 1-A | 1-B | 1-C | 1-D |
| PAR, % | 41.7 | 40.3 | 41.0 | 39.7 |
| PET, % | 41.7 | 40.3 | 41.0 | 39.7 |
| Olefin copolymer A, % | 1.75 | 2.62 | 1.76 | 2.64 |
| Olefin copolymer B, % | 3.49 | 5.24 | 3.53 | 5.29 |
| SAN, 30% acrylonitrile, % | 2.21 | 2.21 | 3.64 | 3.64 |
| Perbromo-1,4-diphenoxybenzene,% | 7.38 | 7.38 | 7.27 | 7.27 |
| $NaSbO_3$,80% in polyethylene, % | 1.85 | 1.85 | 1.82 | 1.82 |

No failures of any of these samples was observed after 166 hours in the grease test. It should be noted that the concentration of olefin copolymer in all these samples is far below the 12% level needed in the absence of SAN to provide consistent protection against stress cracking in the presence of cooking grease. High levels of olefin copolyner can result in the high melt viscosity of the composition. Thus the compositions of the present invention are characterized by excellent solvent stress crack resistance, and freedom to select the proportion of olefin copolymer that will give the desired melt viscosity.

Example 2

A series of compositions was prepared from the ingredients shown in Table V.

TABLE V

| | Sample | | | | | |
|---|---|---|---|---|---|---|
| | 2-A | 2-B | 2-C | 2-D | 2-E | 2-F |
| Polyarylate, % | 42.1 | 40.1 | 41.9 | 41.9 | 40.6 | 45.8 |
| PET, % | 34.5 | 32.8 | 34.3 | 34.3 | 33.2 | 30.5 |
| Olefin copolymer A, % | 3.30 | 7.31 | 3.33 | 5.0 | 7.5 | 3.33 |
| Olefin copolymer B, % | 1.65 | - | 1.67 | - | - | 1.67 |
| SAN, 30% acrylonitrile, % | 1.0 | 2.5 | 1.0 | 1.0 | 1.0 | 1.0 |
| Perbromo-1,4-diphenoxybenzene, % | 10.9 | 10.7 | 11.0 | 11.0 | 11.0 | 11.0 |
| $NaSbO_3$,80% in polyethylene, % | 2.72 | 2.68 | 2.75 | 2.75 | 2.75 | 2.75 |

Samples 2-A and 2-B were prepared by dry blending all ingredients except the SAN and mixing the dry blend in an extruder. After the first passage through the extruder, the SAN was added and all of the ingredients were mixed by a second pass through the extruder. The remaining samples (2-C through 2-F) were prepared by dry blending all of the ingredients and passing the dry blend in a single pass through the extruder.

None of the samples in this example failed the cooking grease stress cracking test after 144 hours at 120° F and an additional 24 hours at 140° F. As little as 5% olefin copolymer in combination with 1% SAN

provided better resistance to stress cracking than did 10% olefin copolymer in the absence of SAN. The melt viscosities of the samples of this example are suitable for injection molding.

Example 3

A polymer composition was prepared from the following ingredients:

| | |
|---|---|
| PAR, % | 44.9 |
| PET, % | 29.9 |
| Olefin copolymer A % | 5.0 |
| SAN, 30% acrylonitrile, % | 1.0 |
| Perbromo-1,4-diphenoxybenzene, % | 12.0 |
| $NaSbO_3$, 80% in Polyethylene, % | 3.0 |
| Black Pigment, 50% concentrate in PET/I, % | 4.0 |
| 1,3,5-trimethyl-2,4,6-tri(3,5-di-tert-butyl-4-hydroxybenzyl) benzene, % | 0.1 |
| Tetrakis[methylene(3,5-di-tert-butyl-4-hydroxyhydrocinnainate)methane] | 0.05 |

All of the materials were dry blended and the resulting dry blend was melt blended by passage through an extruder. Injection molded test bars prepared from the composition passed the cooking grease test after 166 hours.

Example 4

A sample was prepared which contained less PET and was free of flame retardants. The ingredients used to prepare this sample are listed below.

| | |
|---|---|
| PAR, % | 65.1 |
| PET, % | 24.7 |
| Olefin copolymer D, % | 5.0 |
| Olefin copolymer B, % | 1.67 |
| SAN, 30% acrylonitrile, % | 1.0 |
| Black pigment, 50% concentrate in PET/I, % | 4.0 |

The sample was prepared by dry blending all of the ingredients and melt blending by a single pass through an extruder.

Test bars were prepared by injection molding. The test bars passed the cooking grease test after 166 hours.

Example 5

A series of three compositions were prepared from the materials shown in Table VI.

TABLE VI

| | Sample | | |
|---|---|---|---|
| | 5-A (Control) | 5-B | 5-C |
| PAR, % | 92.5 | 90.7 | 87.9 |
| Olefin copolymer B, % | 7.5 | 7.3 | 7.1 |
| SAN, 30% acrylonitrile, % | 0 | 2 | 5 |

Sample 5-A (a control) was prepared by dry blending the PAR and olefin copolymer and passing it through a 28 mm W&P extruder. Samples 5-B and 5-C were prepared by dry blending portions of Sample 5-A with the specfified amounts of SAN and melt blending by a second passage through the extruder. Test bars 1" x 8 x 1/8" were injection molded for the three compositions.

Solvent stress crack resistance toward acetone was determined on the test bars by the following procedure. The test bars were stressed in a three-point blending fixture at a level of surface strain equivalent to 2% fiber tensile strain. The test bars were then sprayed continuously with acetone at room temperature until the samples failed by breaking. The following results were obtained.

Sample 5-A, which did not contain SAN, broke immediately.

Sample 5-B, which contained 2% SAN, broke after about 3 seconds.

Sample 5-C, which contained 5% SAN, remained intact when the test was terminated after 60 seconds.

Obviously the test with acetone is far more severe than the cooking grease test, thus indicating that the acetone is a far more aggressive solvent; however, the observed behavior of the three samples clearly illustrates the superior solvent stress cracking resistance of the compositions of this invention.

## Claims

1. A thermoplastic polyester composition consisting essentially of

(a) 34-98.7 weight percent of at least one polyarylate which is derived from at least one dihydric phenol and derivatives thereof, and at least one aromatic dicarboxylic acid and derivatives thereof,

(b) 0-59.2 weight percent of at least one polyester which is derived from at least one aliphatic or cycloaliphatic diol, and at least one dicarboxylic acid and derivatives thereof,

(c) 1-12 weight percent of at least one olefin copolymer containing epoxide functionality, and

(d) 0.3-8.0 weight percent of at least one nitrile containing copolymer derived from at least one of styrene and α-methylstyrene and at least one of acrylonitrile and methacrylonitrile.

2. The composition of Claim 1 wherein the polyarylate is the reaction product of 2,2-bis(4-hydroxyphenyl)propane and derivatives thereof and at least one compound selected from terephthalic acid, isophthalic acid and derivatives thereof.

3. The composition of Claim 2 wherein the ratio of isophthalic acid and derivatives thereof to terephthalic acid and derivatives thereof is 100:0 to 10:90, preferably 100:0 to 70:30, and especially 100:0 to 90:10.

4. The composition of Claim 1 wherein the dicarboxylic acid of the polyester is selected from terephthalic acid, isophthalic acid and derivatives thereof.

5. The composition of Claim 4 wherein the polyester is poly(ethylene terephthalate).

6. The composition of Claim 1 wherein the olefin copolymer containing epoxide functionality is derived from the monomers:

(a)

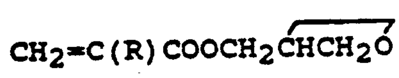

where R = H or alkyl of 1-6 carbon atoms, and

(b) $CH_2 = CHR$ where R = H, lower alkyl or phenyl,

where the monomers of formula (a) comprise 0.5-15 weight percent of the copolymer and the monomers of formula (b) comprise 85-99.5 weight percent of the copolymer, these amounts being based on the amounts of monomers (a) and (b) only.

7. The composition of Claim 1 wherein the olefin copolymer containing epoxide functionality is derived from the monomers:

(a) $CH_2 = C(R)COOCH_2CHCH_2O$ where R = H or alkyl of 1-6 carbon atoms,

(b) $CH_2 = CHR$ where R = H, lower alkyl or phenyl, and

(c) $CH_2 = C(R_1)COOR_2$ where $R_1$ = H or lower alkyl and $R_2$ = alkyl of 1-8 carbons,

where the monomers of formula (a) comprise 0.5-15 weight percent of the copolymer, the monomers of formula (b) comprise 45-99.4 weight percent of the copolymer, and the monomers of formula (c) comprise 0.1-40 weight percent of the copolymer, these amounts being based on the amounts of monomers (a), (b) and (c) only.

8. The composition of Claim 10 wherein the olefin copolymer is a copolymer of 53-99.3 weight percent, preferably 65-84 weight percent ethylene, 0-40 weight percent, preferably 0-30 weight percent of a monomer selected from alkyl acrylates and alkyl methacrylates and being preferably butyl acrylate and 0.6-7 weight percent, preferably 1-7 weight percent of glycidyl methacrylate.

9. The composition of Claim 1 wherein the nitrile containing copolymer contains 10-60 weight percent, preferably 25-45 weight percent of units derived from compounds selected from acrylonitrile and methacrylonitrile.

10. The composition of Claim 1 wherein the nitrile containing copolymer is a styrene-acrylonitrile copolymer.

11. The composition of Claim 1 wherein the nitrile containing copolymer comprises 0.3-5.0 weight percent, preferably 0.5-2.0 weight percent of the composition.

12. Shaped articles made from the composition of Claim 1.